# EUROPÄISCHE PATENTSCHRIFT

(11) **EP 1 517 750 B1**
(45) Veröffentlichungstag und Bekanntmachung des Hinweises auf die Patenterteilung: **20.09.2006**
(21) Anmeldenummer: 03762532.4
(22) Anmeldetag: 27.06.2003
(51) Int. Cl.: B01J 37/02, B01J 35/04

(54) **VERFAHREN UND VORRICHTUNG ZUM RÄUMLICH INHOMOGENEN BESCHICHTEN EINES WABENKÖRPERS**
METHOD AND DEVICE FOR THE SPATIALLY INHOMOGENEOUS COATING OF A HONEYCOMB BODY
PROCEDE ET DISPOSITIF PERMETTANT D'APPLIQUER UN REVETEMENT SPATIALEMENT NON HOMOGENE SUR UN CORPS ALVEOLAIRE

(30) Priorität: 05.07.2002 DE 10230330
(43) Veröffentlichungstag der Anmeldung: 30.03.2005
(73) Patentinhaber: Emitec Gesellschaft für Emissionstechnologie mbH, 53797 Lohmar (DE); AUDI AG, 85045 Ingolstadt (DE)
(72) Erfinder: BRÜCK, Rolf, 51429 Bergisch Gladbach (DE); ODENDALL, Bodo, 86633 Neuburg (DE); PFALZGRAF, Bernhard, 85051 Ingolstadt (DE)
(74) Vertreter: Kahlhöfer, Hermann
(86) Internationale Anmeldenummer: PCT/EP2003/006828
(87) Internationale Veröffentlichungsnummer: WO 2004/004902

(56) Entgegenhaltungen:
- DE-C- 3 912 915
- DE-C- 4 135 055
- US-A- 5 543 181
- US-A1- 2001 006 717

## Beschreibung

Die Erfindung bezieht sich auf ein Verfahren zum Beschichten eines Trägerkörpers, insbesondere eines mit einem Fluid durchströmbaren Wabenkörpers. Derartig beschichtete Wabenkörper werden insbesondere als katalytische Konverter zur Abgasreinigung einer Verbrennungskraftmaschine eingesetzt.

Bekannte Wabenkörper sind von vielen im wesentlichen parallelen Kanälen durchzogen und bestehen beispielsweise aus einem keramischen Formkörper. Als keramisches Material können z.B. Cordierit, Mollit oder α-Aluminiumoxid eingesetzt werden. Extrudierte Trägerkörper werden im wesentlichen aus Cordierit hergestellt, wobei in dem Ausgangsmaterial zusätzlich Kaolin, Aluminiumhydroxid, Aluminimnoxid, Talk, Kohlenstoffpartikel, etc. hinzugegeben werden kann. Bekannt sind auch metallische Wabenkörper, die aus einer Vielzahl teilweise strukturierter und gegebenenfalls gewickelter Blechfolien aufgebaut sind.

In Hinblick auf eine hohe Effektivität der katalytischen Umsetzung von Schadstoffen im Abgas ist es erforderlich, eine möglichst große katalytisch aktive Kontaktfläche des Wabenkörpers zur Verfügung zu stellen. Bei der katalytischen Umsetzung stehen insbesondere folgende Schadstoffe im Vordergrund: Stickoxide, ungesättigte Kohlenwasserstoffe, Kohlenmonoxid etc.. Für eine hohe Effektivität weisen die Wabenkörper sehr hohe Kanaldichten auf, so sind beispielsweise metallische Wabenkörper mit einer Zelldichte von bis zu 1500 cpsi ("cells per square inch") bekannt.

Eine weitere Vergrößerung der katalytisch aktiven Oberfläche wird dadurch erreicht, dass die relativ glatten Kanalwände mit einem sogenannten Washcoat beschichtet werden, der eine sehr zerklüftete Oberfläche aufweist. Diese zerklüftete Oberfläche gewährleistet einerseits ein ausreichend großes Platzangebot für die Fixierung eines Katalysators (z.B. Platin, Rhodium etc.) und bietet andererseits eine große Oberfläche für die Katalyse des durchströmenden Abgases, wobei ein besonders intensiver Kontakt zum Katalysator bewirkt wird.

Das Auftragen der die Katalyse fördernden hochoberflächigen Washcoat-Schicht erfolgt bekanntermaßen in der Weise, dass der Wabenkörper in eine flüssigen Washcoat-Dispersion getaucht oder mit dieser besprüht wird. Anschließend wird die überschüssige Washcoat-Dispersion entfernt, der Washcoat im Wabenkörper getrocknet und abschließend bei Temperaturen meist über 450°C kalziniert. Während des Kalzinierens werden die flüchtigen Bestandteile der Washcoat-Dispersion ausgetrieben, so dass eine temperaturbeständige und katalysefördernde Schicht mit hoher spezifischer Oberfläche erzeugt wird. Gegebenenfalls wird dieser Vorgang mehrfach wiederholt, um eine gewünschte Schichtdicke zu erreichen.

Der Washcoat besteht gewöhnlich aus einer Mischung eines Aluminiumoxids der Übergangsreihe und mindestens einem Promoteroxid wie beispielsweise Seltenerdoxiden, Zirkonoxid, Nickeloxid, Eisenoxid, Germaniumoxid und Bariumoxid.

Bislang war man stets darauf bedacht, dass die Washcoat-Dispersion während des Auftragens auf den Wabenkörper eine möglichst gleichmäßige Fließeigenschaft aufweisen muss, um eine gewünschte, gleichmäßige Schichtdicke über die gesamte Kanallänge zu erzielen. Eine besonders gleichmäßige Dicke sollte insbesondere bei sehr kleinen Kanalquerschnitten, wie sie der momentane Trend der Entwicklung anstrebt, erreicht werden.

Auch Wabenkörper mit inhomogenen Beschichtungen sind bekannt, beispielsweise aus der US 2001/0006717 A1 ein Wabenkörper mit radial inhomogener Beschichtung.

Ein wesentlicher Kostenfaktor bei katalytischen Konvertern sind jedoch die Kosten für Beschichtungsmaterialien, insbesondere für die katalytisch aktiven Substanzen wie z.B. Edelmetalle.

Es ist somit Aufgabe der vorliegenden Erfindung, ein Verfahren zum Beschichten eines Trägerkörpers, sowie eine Vorrichtung zum Beschichten eines Wabenkörpers anzugeben, bei denen eine effiziente Katalyse von Schadstoffen sicher gestellt wird und Kosten eingespart werden.

Diese Aufgabe wird gelöst durch ein Verfahren gemäß den Merkmalen des Anspruchs 1 und durch eine Vorrichtung mit den Merkmalen des Anspruchs 17. Weitere vorteilhafte Ausgestaltungen und Weiterbildungen, die jeweils einzeln angewandt oder beliebig miteinander kombiniert werden können, sind Gegenstand der jeweils abhängigen Ansprüche.

Bei dem erfindungsgemäßen Verfahren zum Beschichten eines Trägerkörpers, insbesondere eines mit einem Fluid durchströmbaren Wabenkörpers, mit einem Beschichtungsmaterial, das auf den Trägerkörper aufgetragen wird, ist die räumliche Temperaturverteilung des Beschichtungsmaterials im Trägerkörper während des Auftragens und/oder nach dem Auftragen inhomogen.

Mit Hilfe der inhomogenen Temperaturverteilung des Beschichtungsmaterials wird während des Beschichtungsvorgangs eine räumlich inhomogene Viskosität des Beschichtungsmaterials im Trägerkörper erzeugt. Da die Viskosität des Beschichtungsmaterials von der Temperatur abhängig ist, kann durch die inhomogene Temperaturverteilung des Beschichtungsmaterials ein Abfließen des Beschichtungsmaterials vom Trägerkörper beeinflusst werden und somit eine variierende Beschichtungsdicke eingestellt werden. Damit führt eine räumlich inhomogene Temperaturverteilung zu einer räumlich inhomogenen Schichtdickeverteilung.

Mit Hilfe dieses Verfahrens kann auf vorteilhafte Weise die Beschichtungsdicke entsprechend den Erfordernissen der Katalyse, insbesondere ihrer räumlichen Ausprägung, angepasst werden. Insbesondere werden Bereiche, in denen nur eine geringere katalytische Umsetzung als in anderen Bereichen stattfindet, mit vergleichsweise weniger Beschichtungsmaterial ausgestaltet werden als andere Bereiche, in denen die katalytische Umsetzung vornehmlich stattfindet. Hiermit werden die Kosten von Beschichtungsmaterial reduziert, während eine effiziente katalytische Umsetzung gewährleistet wird.

Beispielsweise wird an der Anströmseite des Trägerkörpers eine größere Beschichtungsdicke gewählt als an einer Abströmseite, da erfahrungsgemäß an der Anströmseite prozentual mehr Schadstoffe katalytisch umgesetzt werden als an der Abströmseite, so dass an der Anströmseite eine größere Schichtdicke des Beschichtungsmaterials notwendig ist als an der Abströmseite. Hiermit wird Beschichtungsmaterial an der Abströmseite gespart.

Darüber hinaus kann eine Beschichtungsdicke im Inneren des Trägerkörpers gewählt werden, die radial von innen nach außen abnimmt. Auch hierdurch wird ein vollständige Katalyse in Bereichen hoher katalytischer Aktivität mit Hilfe der größeren Schichtdicke sichergestellt und Beschichtungsmaterial in Bereichen niedriger katalytischer Aktivität mit Hilfe einer geringeren Beschichtungsdicke eingespart.

In einer Ausgestaltung des erfindungsgemäßen Verfahrens ist die räumliche Temperaturverteilung in einer axialen Richtung des Trägerkörpers inhomogen. Eine räumliche Temperaturverteilung in einer axialen Richtung des Trägerkörpers bewirkt eine entsprechende Viskositätsverteilung in dieser Richtung, woraus eine dazu korrespondierende Beschichtungsdickenverteilung folgt.

Mit Hilfe einer in einer axialen Richtung des Trägerkörpers variierenden Beschichtungsdicke kann das räumliche Profil der Katalyse beeinflusst werden. Die Katalyse kann auf bestimmte Raumbereich konzentriert bzw. von diesen fern gehalten werden. Auch kann durch Vorgabe eines räumlichen Profils der Katalyse das Startverhalten der Katalyse beeinflusst werden.

Beispielsweise bewirkt eine Konzentrierung der Katalyse auf (in Strömungsrichtung des Fluids) vordere Bereiche des Trägerkörpers, dass der überwiegende Anteil der Katalyse nur in einem Teil des Trägerkörpers stattfindet. Dieser Teil des Katalysators erreicht aufgrund seiner, bezogen auf den ganzen Trägerkörper, geringeren Wärmeträgheit die für das Einsetzen der Katalyse erforderliche Zündtemperatur, da weniger Masse auf die erforderliche Zündtemperatur gebracht werden muss. Damit wird ein besonders günstiges Startverhalten des katalytischen Konverters bewirkt.

Bereiche, die in Strömungsrichtung weiter hinten liegen gewährleisten eine vollständige Umsetzung der Schadstoffe. Diese Bereiche sind insbesondere im warmen Zustand des Katalysators wichtig. Sie erfordern jedoch nur weniger katalytisch aktives Material, da der Großteil der Schadstoffmenge bereits an der Anströmseite umgesetzt wird.

Vorteilhafterweise ist die räumliche Temperaturverteilung in einer radialen Richtung des Trägerkörpers inhomogen. Diese Art der Inhomogenität der Schichtdicke trägt dem Umstand Rechnung, dass die Strömungsgeschwindigkeiten des zureinigenden Fluids (z.B. Abgas) im zentralen Bereich des Trägerkörpers besonders groß sind, so dass in den zentralen Bereichen besonders viel Schadstoffe umgesetzt werden müssen. Eine dickere Beschichtung in diesem zentralen Bereich bewirkt eine vergrößerte Oberfläche für die katalytische Umsetzung und stellt somit eine effektive katalytische Umsetzung auch in diesen Bereichen des katalytischen Konverters sicher.

In den Randbereichen sind die Strömungsgeschwindigkeiten kleiner und es müssen weniger Schadstoffe umgesetzt werden. Mit anderen Worten aufgrund des Strömungsprofils des zu reinigenden Fluids muss ein Kanal am Rand weniger Schadstoffe umsetzen als ein Kanal im Zentrum des katalytischen Konverters bei gleichem Kanalquerschnitt. Aus diesem Grund sind in den Randbereichen kleinere Schichtdicken erforderlich. Durch geringere Beschichtungsdicken am Rand werden Kosten für katalytisch wirkende Materialen wie z.B. Edelmetalle gespart.

Es ist von Vorteil, wenn der Temperaturunterschied der räumlichen inhomogenen Temperaturverteilung mindestens 2°C, insbesondere mindestens 5°C, beträgt. Besonders bevorzugt sind jedoch mindestens 15°C, wodurch die Unterschiede in der Viskosität aufgrund der unterschiedlichen Temperatur besonders stark ausgebildet sind. Vorteilhafterweise treten Viskositätsunterschiede eines flüssigen Beschichtungsmaterials von mindestens 1 %, insbesondere von mindestens 3 %, vorzugsweise von mindestens 10%, auf.

Der Temperaturunterschied innerhalb der inhomogenen Temperaturverteilung kann durch lokales Kühlen und/oder lokales Heizen des Trägerkörpers bewirkt werden. Beispielsweise kann der Trägerkörper durch Kontakt mit einem Kühlkörper lokal gekühlt werden. Alternativ wird der Trägerkörper mit Hilfe einer Infrarotlampe oder durch Kontakt mit einem Heizkörper lokal erwärmt.

Der Temperaturunterschied der inhomogenen Temperaturverteilung des Beschichtungsmaterials kann auch durch lokales Kühlen und/oder lokales Heizen des Beschichtungsmaterials bewirkt werden. In dieser Variante wird die inhomogene Temperaturverteilung nicht durch Wärmeübertrag vom Trägerkörper auf das Beschichtungsmaterial bewirkt, sondern durch direktes lokales Kühlen bzw. lokales Heizen des Beschichtungsmaterials.

Dieses kann beispielsweise mit Hilfe einer Infrarotlampe oder durch Vorgabe einer räumlichen Temperaturinhomogenität des Beschichtungsmaterials vor dem Auftragen auf den Trägerkörper bewirkt werden. Beispielsweise wird ein zentraler Bereich des Trägerkörpers mit kälterem Beschichtungsmaterial besprüht als ein weiter außen gelegener Bereich.

Vorteilhafterweise wird das Beschichtungsmaterial und/oder der Trägerkörper an verschiedenen Stellen erwärmt und/oder gekühlt. Beispielsweise kann der Trägerkörper zwischen einem Heizkörper und einem Kühlkörper eingespannt werden, so dass sich ein Temperaturgefälle in dem Trägerkörper zwischen den Kontaktflächen der jeweiligen Heiz- bzw. Kühlkörper ausbildet.

Durch Vorgabe mehrerer Wärme- bzw. Kältequellen kann die Temperaturverteilung des Beschichtungsmaterials im Trägerkörper in weiten Grenzen präzise vorgegeben werden. Insbesondere ist hiermit eine variierende Schichtdicke einstellbar, die eine effiziente Katalyse erlaubt und zugleich die Kosten des benötigten Beschichtungsmaterials senkt.

In einer weiteren Ausgestaltung des erfindungsgemäßen Verfahrens weist der Trägerkörper vor dem Auftragen eine Temperatur auf, die verschieden ist von der Temperatur des Beschichtungsmaterials. Durch die Wärmekapazität des Trägerkörpers und den Wärme- bzw. Kälteübergang von dem Trägerkörper auf das Beschichtungsmaterial wird eine inhomogene Temperaturverteilung des Beschichtungsmaterials erzielt

Allein durch den Temperaturunterschied zwischen Trägerkörper und Beschichtungsmaterial wird erreicht, dass das Beschichtungsmaterial beim Durchfließen durch den Trägerkörper erwärmt (abgekühlt) wird und somit eine inhomogene Temperaturverteilung resultiert. Alternativ weist der Trägerkörper vor dem Auftragen in seinem Inneren eine räumlich inhomogene Temperaturverteilung auf

Die räumliche inhomogene Temperaturverteilung des Beschichtungsmaterials kann durch eine Temperaturdifferenz zwischen Beschichtungsmaterial und dem Trägerkörper vor dem Auftragen, durch eine räumliche Temperaturverteilung des Trägerkörpers vor dem Auftragen, durch lokales Heizen/Kühlen während des Auftragens, oder durch einer räumliche Inhomogenität des Beschichtungsmaterials vor dem Auftragen bewirkt werden. Durch Kombination dieser beiden Möglichkeiten kann eine räumliche Temperaturverteilung des Beschichtungsmaterials bzw. eine räumliche Verteilung der Beschichtungsdicken in großen Grenzen variiert bzw. vorgegeben werden.

Vorteilhafterweise wird der Trägerkörper durch elektromagnetische Strahlung, insbesondere Induktion oder Mikrowellen, lokal erwärmt. Durch eine lokale Induktion kann eine räumliche inhomogene Temperaturverteilung des Beschichtungsmaterials dadurch erzielt werden, dass der Trägerkörper entweder vor oder während des Auftragens erhitzt wird.

Vorteilhafterweise wird der Trägerkörper durch lokalen Wärmekontakt erwärmt und/oder durch lokalen Kältekontakt abgekühlt. Alternativ wird der Trägerkörper und/oder das Beschichtungsmaterial mit Hilfe eines Fluidstroms lokal erwärmt oder abgekühlt Bei einem Wärmeübertrag mit Hilfe eines Fluidstromes spielen Wärmekonvektion neben Wärmekontakt eine erhebliche Rolle. Weiterhin kann der Trägerkörper und/oder das Beschichtungsmaterial mit Hilfe einer Infrarotlampe, insbesondere durch Wärmestrahlung, lokal erwärmt bzw. abgekühlt werden.

Durch Vorgabe mehrerer Wärmesenken bzw. Wärmequellen, gegebenenfalls an verschiedenen Orten, kann die inhomogene Temperaturverteilung des Beschichtungsmaterials und damit die variierende Beschichtungsdicke präzise vorgegeben werden.

In einer speziellen Ausgestaltung des erfindungsgemäßen Verfahrens wird das Beschichtungsmaterial in flüssiger Form, insbesondere als Suspension, aufgetragen. Das Beschichtungsmaterial kann beispielsweise mit Hilfe eines Tauchbades aufgetragen werden oder aufgesprüht werden.

Als Beschichtungsmaterial wird vorteilhafterweise ein Washcoat verwendet, wobei der Washcoat vorteilhafterweise aus einer Mischung eines Aluminiumoxids der Übergangsreihe und mindestens einem Promoteroxid wie beispielsweise Seltenerdoxiden, Zirkonoxid, Nickeloxid, Eisenoxid, Germaniumoxid und Bariumoxid besteht. Derartige Washcoats bieten eine zerklüftete Oberfläche, die einerseits ein ausreichend großes Platzangebot für die Fixierung eines Katalysators bietet und andererseits zur Verbesserung des Stofftransportes durch Diffusion im durchströmenden Abgas dient. Das Beschichtungsmaterial weist vorteilhafterweise katalytisch wirksame Substanzen (z.B. Platin, Rhodium usw.), insbesondere Edelmetalle auf.

Ein Norteilhalter Trägerkörper umfasst von einem Fluid durchströmbare Kanäle, eine Einlassseite, eine Auslassseite, einen Innenbereich und einen Außenbereich, wobei die Kanäle mit einer Beschichtungsdicke eines Beschichtungsmaterials beschichtet sind und ist dadurch gekennzeichnet, dass die Beschichtungsdicke der jeweiligen Kanäle verschieden ist und/oder die Beschichtungsdicke entlang der Kanäle variiert

Durch diese inhomogene Beschichtungsdicke wird dem räumlichen Profil der katalytischen Umsetzung Rechnung getragen, insbesondere wird gewährleistet, dass in Bereichen hoher katalytischer Aktivität ausreichend viel Beschichtungsmaterial vorhanden ist und in Bereichen geringerer katalytischer Aktivität überflüssiges Beschichtungsmaterial eingespart wird. Entgegen der bisherigen Ansicht wird somit auf eine besondere Gleichmäßigkeit des Beschichtungsmaterials verzichtet, um eine besonders maßgeschneiderte, auf die tatsächlich stattfindende katalytische Reaktion abgestimmte Beschichtung zu erzielen. Hiermit wird zum einem eine hocheffiziente katalytische Umsetzung gewährleistet, zum anderen überflüssiges, teures Beschichtungsmaterial eingespart.

Die Beschichtungsdicke kann von Kanal zu Kanal hin verschieden sein, insbesondere in einem Zentrum des Trägerkörpers dicker sein als in weiter außen gelegenen Bereichen. Beispielsweise nimmt die Beschichtungsdicke vom Zentrum des Trägerkörpers radial nach außen hin ab.

Die Beschichtungsdicke kann jedoch auch entlang der Kanäle variieren, wobei bevorzugterweise die Beschichtungsdicke im wesentlichen in Strömungsrichtung abnimmt.

Vorteilhafterweise nimmt die Beschichtungsdicke entlang der Kanäle von der Einlassseite des Trägerkörpers zur Auslassseite hin ab. Hiermit wird eine katalytische Umsetzung auf den vorderen Bereich des Trägerkörpers konzentriert und eine besonders vollständig katalytische Umsetzung durch den hinteren Bereich des Trägerkörpers gewährleistet.

Vorteilhafterweise nimmt die Beschichtungsdicke von Kanal zu Kanal von dem Innenbereich zu dem Außenbereich hin ab. Hierdurch wird dem Strömungsprofil des zu reinigenden Fluids Rechnung getragen und es wird Beschichtungsmaterial mit der Dicke aufgetragen wie es der katalytischen Konvertierungsrate entspricht. In den äußeren Bereichen, wo weniger Fluid strömt und somit eine geringere katalytische Aktivität zu erwarten ist, wird überflüssiges Beschichtungsmaterial eingespart.

Vorteilhafterweise nimmt die Beschichtungsdicke im wesentlichen linear ab. Ein linearer räumlicher Beschichtungsdickenverlauf kann mit einfachen Mitteln durch Vorgabe entsprechender Kälte- bzw. Wärmequellen vorgegeben werden. Weiterhin ist es vorteilhaft, dass die Beschichtungsdicke im wesentlichen exponentiell abnimmt. Durch einen exponentiellen Verlauf wird besonders viel Beschichtungsmaterial eingespart.

Hierbei kann der räumliche Profil der Beschichtungsdicke in unterschiedliche Raumrichtungen unterschiedlich sein. Beispielsweise kann die Beschichtungsdicke entlang der Kanäle exponentiell abnehmen und radial von innen nach außen linear abnehmen oder umgekehrt.

Vorteilhafterweise nimmt die Beschichtungsdicke um mindestens 10 %, vorzugsweise um mindestens 30 %, besonders bevorzugt um mindestens 80 % ab. An diesen Zahlen ist zu erkennen, dass Beschichtungsmaterial, insbesondere kostenintensive katalytisch wirksame Substanzen wie Edelmetalle, um mindestens 5 % bis hin zu mindestens 40 % mit Hilfe der Erfindung eingespart werden kann.

Die erfindungsgemäße Vorrichtung zum Beschichten eines Trägerkörpers mit einem Beschichtungsmaterial, insbesondere eines erfindungsgemäßen Trägerkörpers, vorzugsweise mit dem erfindungsgemäßen Verfahren, umfasst ein Auftragmittel und mindestens ein Temperaturvorgabemittel, wobei mit Hilfe des Auftragmittels das Beschichtungsmaterial auf den Trägerkörper auftragbar ist und mit Hilfe des Temperaturvorgabemittels eine räumlich inhomogene Temperaturverteilung des Beschichtungsmaterials vor oder während des Auftragens des Beschichtungsmaterials erzeugbar ist.

Das Auftragmittel kann beispielsweise ein Tauchbad oder eine Düse zum Aufsprühen des Beschichtungsmaterials sein. Das Temperaturvorgabemittel ist beispielsweise eine Wärme- bzw. Kältequelle in Form eines Kühlkörpers bzw. Heizkörpers oder einer Wärmelampe bzw. eines Induktionsheizers. Der Trägerkörper wird mit Hilfe von Wärmeleitung, Wärmekonvektion bzw. Wärmestrahlung lokal erwärmt bzw. abgekühlt, so dass ein räumlich inhomogenes Temperaturprofil des Beschichtungsmittels erzeugbar ist Mit Hilfe dieser Vorrichtung wird die Beschichtungsdicke des Beschichtungsmaterials auf dem Trägerkörper kontrolliert eingestellt. Beispielsweise wird in Bereichen hoher katalytischer Aktivität, insbesondere an der Anströmseite des Trägerkörpers, bzw. in einem Innenbereich des Trägerkörpers besonders viel Beschichtung vorgesehen.

Bei der erfindungsgemäßen Vorrichtung sind mindestens zwei Temperaturvorgabemittel zur Erzeugung einer räumlich inhomogenen Temperaturverteilung im Trägerkörper vorhanden. Durch mindestens zwei Temperaturvorgabemittel kann ein besonders steiler Temperaturgradient erzeugt werden, wodurch die Beschichtungsdicke in besonders starkem Maße variiert werden kann.

Weiter Vorzüge und vorteilhafte Ausgestaltungen werden anhand der folgenden Zeichnung erläutert, die die Erfindung nicht einschränken, sondern diese nur veranschaulichen soll.

Es zeigen schematisch:
- Figur 1: einen erfindungsgemäßen Wabenkörper in perspektivischer Schrägansicht, und
- Figur 2a, 2b: zwei Schritte des erfindungsgemäßen Verfahrens zum Beschichten eines Wabenkörpers.

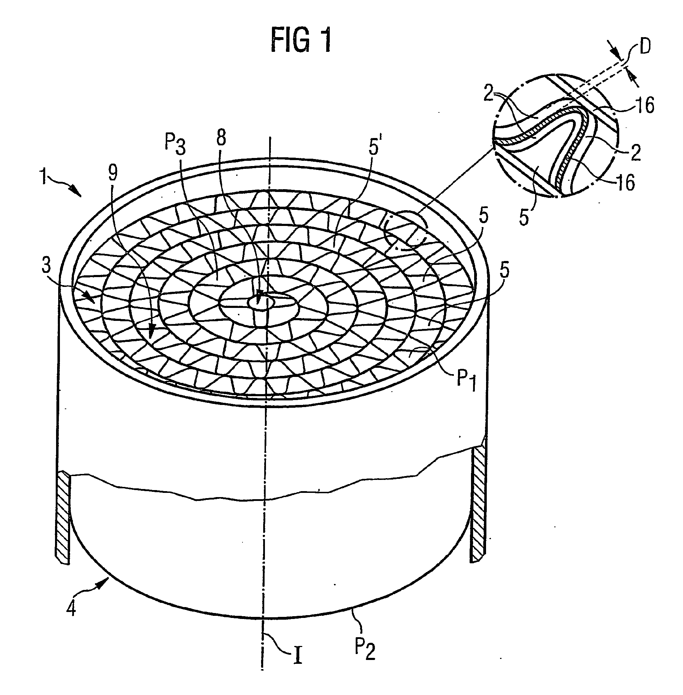

Figur 1 zeigt einen Trägerkörper 1, der als katalytischer Wabenkörper ausgebildet ist. Der Trägerkörper 1 ist durch Stapeln, bzw. Schichten glatter, bzw. gewellter Lagen von metallischen Blechen ausgebildet. Der Trägerkörper 1 weist einen Innenbereich 8 und einen Außenbereich 9 bzw. eine Einlassseite 3 und eine Auslassseite 4 auf Die Einlassseite 3 dient als Anströmseite des Fluids. Zwischen der Einlassseite 3 und der Auslassseite 4 sind für ein Fluid durchströmbare Kanäle 5, 5' angeordnet. Das Fluid strömt durch die Kanäle 5, 5' im wesentlichen entlang einer Richtung I.

Die Kanäle 5, 5' werden durch Bleche 16 gebildet, die mit einem Beschichtungsmaterial 2 variierender Beschichtungsdicke D überzogen bzw. beschichtet sind. Die Beschichtungsdicke D nimmt entlang der Strömungskanäle von der Einlassseite 3 zur Auslassseite 4 hin ab, wobei ein exponentielles Profil bevorzugt ist. Die Beschichtungsdicke D nimmt auch von dem Innenbereich 8 zum Außenbereich 9 radial nach außen hin ab. Hierbei wird vorteilhafterweise ein im wesentlichen linearer Verlauf gewählt Damit ist die Beschichtungsdicke D an einer Stelle P1 dicker als an einer zweiten Stelle P2, jedoch nicht so dick wie an einer dritten Stelle P3.

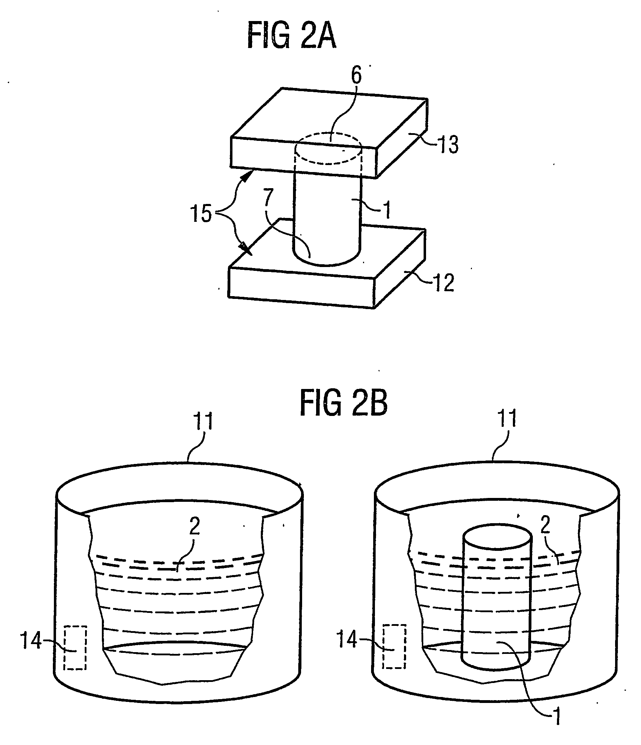

Figuren 2a und 2b zeigen das erfindungsgemäße Verfahren zum Beschichten eines Trägerkörpers 1 mit einem Beschichtungsmaterial 2, das auf den Trägerkörper 1 mit einem Auftragmittel 11, welches als Tauchbad ausgestaltet ist, aufgetragen wird. Hierzu wird der Trägerkörper 1 zwischen einem ersten Temperaturvorgabemittel 12 und einem zweiten Temperaturvorgabemittel 13 eingespannt, so dass durch einen Wärmekontakt 6 zwischen Trägerkörper 1 und zweiten Temperaturvorgabemittel 13, welches als Heizkörper ausgestaltet ist, Wärme von dem zweiten Temperaturvorgabemittel 13 auf den Trägerkörper 1 übergeht und dass durch einen Kältekontakt 7 zwischen dem Trägerkörper 1 und dem ersten Temperaturvorgabemittel 12 Kälte von dem ersten Temperaturvorgabemittel 12 auf den Trägerkörper 1 übertragen wird. Die Temperaturdifferenz zwischen den beiden Temperaturvorgabemittel beträgt vorteilhafterweise 5°C.

Mit Hilfe der beiden Temperaturvorgabemittel wird eine inhomogene Temperaturverteilung des Trägerkörpers 1 entlang der Richtung I der Kanäle 5 induziert. Das Auftragmittel 11 umfasst ein Bad mit Beschichtungsmaterial 12, welches mit Hilfe eines dritten Temperaturvorgabemittels 14 auf eine vorgegebene Temperatur gebracht wird. Anschließend wird der Trägerkörper 1 in das Beschichtungsmaterial 2 getaucht (Figur 2b), so dass Beschichtungsmaterial 2 in die Kanäle 5 des Trägerkörpers 1 eindringt. Der Trägerkörper 1 wird schließlich aus dem Bad herausgezogen.

Durch das inhomogene Temperaturprofil im Trägerkörper 1 vor dem Eintauchen und die Temperatur des dritten Temperaturvorgabemittels 14 wird die Beschichtungsdicke D in ihrem räumlichen Profil präzise eingestellt. Insbesondere wird somit auf dem Trägerkörper 1 eine entsprechend inhomogene Temperaturverteilung erzielt, die eine entsprechende Viskosität des Beschichtungsmaterials 2 bedingt.

Durch schnelles Herausziehen aus dem als Tauchbad ausgebildeten Auftragmittel 11 fließt das Beschichtungsmaterial 2 entsprechend der Viskosität an unterschiedlichen räumlichen Stellen P1, P2, P3 unterschiedlich schnell ab und bildet so eine räumlich inhomogene Beschichtungsdicke D.

Die Erfindung betrifft ein Verfahren zum Beschichten eines Trägerkörpers 1, insbesondere eines mit einem Fluid durchströmbaren Wabenkörpers, mit einem Beschichtungsmaterial 2, das auf den Trägerkörper 1 aufgetragen wird, wobei die räumliche Temperaturverteilung des Beschichtungsmaterials 2 im Trägerkörper 1 während des Auftragens und/oder nach dem Auftragen inhomogen ist, sowie einen Trägerkörper mit einer räumlich inhomogenen Beschichtungsdicke und eine Vorrichtung zum inhomogenen Beschichten eines Trägerkörpers 1.

Die Erfindung zeichnet sich dadurch aus, dass eine effiziente Katalyse sichergestellt wird und überflüssiges Beschichtungsmaterial an Stellen, wo es nicht erforderlich ist, eingespart wird.

### Bezugszeichenliste

- 1: Trägerkörper
- 2: Beschichtungsmaterial
- 3: Einlassseite
- 4: Auslassseite
- 5, 5': Kanal
- 6: Wärmekontakt
- 7: Kältekontakt
- 8: Innenbereich
- 9: Außenbereich
- 11: Auftragmittel
- 12: erstes Temperaturvorgabemittel
- **13**: zweites Temperaturvorgabemittel
- 14: drittes Temperaturvorgabemittel
- 15: Kontakt
- 16: Blech

- P1: erste Stelle
- P2: zweite Stelle
- P3: dritte Stelle
- D: Beschichtungsdicke
- I: Richtung

## Patentansprüche

1. Verfahren zum Beschichten eines Trägerkörpers (1), insbesondere eines mit einem Fluid durchströmbaren Wabenkörpers, mit einem Beschichtungsmaterial (2), das auf den Trägerkörper (1) aufgetragen wird, wobei die räumliche Temperaturverteilung des Beschichtungsmaterials (2) im Trägerkörper (1) während des Auftragens und/oder nach dem Auftragen inhomogen ist.

2. Verfahren nach Anspruch 1, **dadurch gekennzeichnet, dass** die räumliche Temperaturverteilung in einer axialen Richtung des Trägerkörpers (1) inhomogen ist.

3. Verfahren nach Anspruch 1 oder 2, **dadurch gekennzeichnet, dass** die räumliche Temperaturverteilung in einer radialen Richtung des Trägerkörpers (1) inhomogen ist.

4. Verfahren nach einem der vorherigen Ansprüche, **dadurch gekennzeichnet, dass** der Temperaturunterschied mindestens 2° C, insbesondere mindestens 5° C, vorzugsweise mindestens 15° C, beträgt.

5. Verfahren nach einem der vorherigen Ansprüche, **dadurch gekennzeichnet, dass** der Temperaturunterschied durch lokales Kühlen und/oder lokales Heizen des Trägerkörpers (1) bewirkt wird.

6. Verfahren nach einem der vorherigen Ansprüche, **dadurch gekennzeichnet, dass** der Temperaturunterschied durch lokales Kühlen und/oder lokales Heizen des Beschichtungsmaterials (2) bewirkt wird.

7. Verfahren nach einem der vorherigen Ansprüche, **dadurch gekennzeichnet dass** das Beschichtungsmaterial (2) und/oder der Trägerkörper (1) an verschiedenen Stellen (P1, P2, P3) erwärmt und/oder gekühlt wird.

8. Verfahren nach einem der vorherigen Ansprüche, **dadurch gekennzeichnet, dass** der Trägerkörper (1) vor dem Auftragen eine Temperatur aufweist, die verschieden ist von der Temperatur des Beschichtungsmaterials (2).

9. Verfahren nach einem der vorherigen Ansprüche, **dadurch gekennzeichnet, dass** der Trägerkörper (1) vor dem Auftragen eine räumlich inhomogene Temperaturverteilung aufweist.

10. Verfahren nach einem der vorherigen Ansprüche, **dadurch gekennzeichnet, dass** der Trägerkörper (1) durch elektromagnetische Strahlung, insbesondere elektromagnetische Induktion oder Mikrowellen, lokal erwärmt wird.

11. Verfahren nach einem der vorherigen Ansprüche, **dadurch gekennzeichnet, dass** der Trägerkörper (1) und/oder das Beschichtungsmaterial (2) durch Wärmestrahlung lokal erwärmt wird.

12. Verfahren nach einem der vorherigen Ansprüche, **dadurch gekennzeichnet, dass** der Trägerkörper (1) durch lokalen Wärmekontakt (6) erwärmt und/oder durch lokalen Kältekontakt (7) abgekühlt wird.

13. Verfahren nach einem der vorherigen Ansprüche, **dadurch gekennzeichnet, dass** der Trägerkörper (1) und/oder das Beschichtungsmaterial (2) mit Hilfe eines Fluidstroms lokal erwärmt oder abgekühlt wird.

14. Verfahren nach einem der vorherigen Ansprüche, **dadurch gekennzeichnet, dass** das Beschichtungsmaterial (2) in flüssiger Form, insbesondere als Suspension, aufgetragen wird.

15. Verfahren nach einem der vorherigen Ansprüche, **dadurch gekennzeichnet, dass** als Beschichtungsmaterial (2) ein Washcoat verwendet wird.

16. Verfahren nach einem der vorherigen Ansprüche, **dadurch gekennzeichnet, dass** das Beschichtungsmaterial (2) katalytische wirksame Substanzen, insbesondere Edelmetalle, aufweist.

17. Vorrichtung zum Beschichten eines Trägerkörpers (1) mit einem Beschichtungsmaterial (2), vorzugsweise mit einem Verfahren nach einem der Ansprüche 1 bis 16, umfassend ein Auftragmittel (11) und mindestens ein Temperaturvorgabemittel (12, 13, 14), wobei mit Hilfe des Auftragmittels (11) das Beschichtungsmaterial auf den Trägerkörper (1) auftragbar ist und mit Hilfe des Temperaturvorgabemittels (12, 13, 14) eine räumlich inhomogene Temperaturverteilung des Beschichtungsmaterials (2) vor oder während des Auftragens des Beschichtungsmaterials (2) erzeugbar ist **gekennzeichnet durch** mindestens zwei Temperaturvorgabemittel (12, 13, 14) zur Erzeugung einer räumlichen inhomogenen Temperaturverteilung im Trägerkörper (1).

## Claims

1. A process for coating a support body (1), in particular a honeycomb body through which a fluid can flow, with a coating material (2) which is applied to the support body (1), in which process the spatial temperature distribution of the coating material (2) in the support body (1) is inhomogeneous during application and/or after application.

2. The process as claimed in claim 1, **characterized in that** the spatial temperature distribution is inhomogeneous in an axial direction of the support body (1).

3. The process as claimed in claim 1 or 2, **characterized in that** the spatial temperature distribution is inhomogeneous in a radial direction of the support body (1).

4. The process as claimed in one of the preceding claims, **characterized in that** the temperature difference amounts to at least 2°C, in particular at least 5°C, preferably at least 15°C.

5. The process as claimed in one of the preceding claims, **characterized in that** the temperature difference is effected by local cooling and/or local heating of the support body (1).

6. The process as claimed in one of the preceding claims, **characterized in that** the temperature difference is effected by local cooling and/or local heating of the coating material (2).

7. The process as claimed in one of the preceding claims, **characterized in that** the coating material (2) and/or the support body (1) is heated and/or cooled at various locations (P1, P2, P3).

8. The process as claimed in one of the preceding claims, **characterized in that** the support body (1), prior to the application, is at a temperature which is different than the temperature of the coating material (2).

9. The process as claimed in one of the preceding claims, **characterized in that** the support body (1) has a spatially inhomogeneous temperature distribution before the application.

10. The process as claimed in one of the preceding claims, **characterized in that** the support body (1) is locally heated by electromagnetic radiation, in particular electromagnetic induction or microwaves.

11. The process as claimed in one of the preceding claims, **characterized in that** the support body (1) and/or the coating material (2) is locally heated by thermal radiation.

12. The process as claimed in one of the preceding claims, **characterized in that** the support body (1) is heated by local heat contact (6) and/or cooled by local refrigeration contact (7).

13. The process as claimed in one of the preceding claims, **characterized in that** the support body (1) and/or the coating material (2) is/are locally heated or cooled with the aid of a stream of fluid.

14. The process as claimed in one of the preceding claims, **characterized in that** the coating material (2) is applied in liquid form, in particular as a suspension.

15. The process as claimed in one of the preceding claims, **characterized in that** the coating material (2) used is a washcoat.

16. The process as claimed in one of the preceding claims, **characterized in that** the coating material (2) includes catalytically active substances, in particular precious metals.

17. An apparatus for coating a support body (1) with a coating material (2), preferably using the process as claimed in one of claims 1 to 16, comprising an application means (11) and at least one temperature-stipulating means (12, 13, 14), it being possible for the coating material to be applied to the support body (1) with the aid of the application means (11) and for a spatially inhomogeneous temperature distribution of the coating material (2) to be produced before or during the application of the coating material (2) with the aid of the temperature-stipulating means (12, 13, 14), **characterized by** at least two temperature-stipulating means (12, 13, 14) for producing a spatially inhomogeneous temperature distribution in the support body (1).

## Revendications

1. Procédé de revêtement d'un corps support (1), notamment d'un corps en nids d'abeilles à travers lequel peut s'écouler un fluide, avec un matériau de revêtement (2) qui est appliqué sur le corps support (1), dans quel cas la distribution spatiale de la température du matériau de revêtement (2) dans le corps support (1) est inhomogène durant l'application et/ou après l'application.

2. Procédé selon la revendication 1, **caractérisé en ce que** la distribution spatiale de la température est inhomogène en une direction axiale du corps support (1).

3. Procédé selon la revendication 1 ou 2, **caractérisé en ce que** la distribution spatiale de la température est inhomogène en une direction radiale du corps support (1).

4. Procédé selon l'une des revendications précédentes, **caractérisé en ce que** la différence de température comporte au moins 2°C, notamment au moins 5°C, de préférence au moins 15°C.

5. Procédé selon l'une des revendications précédentes, **caractérisé en ce que** la différence de température est provoquée par refroidissement local et/ou par chauffage local du corps support (1).

6. Procédé selon l'une des revendications précédentes, **caractérisé en ce que** la différence de température est provoquée par refroidissement local et/ou par chauffage local du matériau de revêtement (2).

7. Procédé selon l'une des revendications précédentes, **caractérisé en ce que** le matériau de revêtement (2) et/ou le corps support (1) est chauffé et/ou refroidi à des endroits divers (P1, P2, P3).

8. Procédé selon l'une des revendications précédentes, **caractérisé en ce qu'**avant l'application le corps support (1) a une température qui est différente de la température du matériau de revêtement (2).

9. Procédé selon l'une des revendications précédentes, **caractérisé en ce qu'**avant l'application le corps support (1) a une distribution de la température qui est spatialement inhomogène.

10. Procédé selon l'une des revendications précédentes, **caractérisé en ce que** le corps support (1) est chauffé localement par de la radiation électromagnétique, notamment par de l'induction électromagnétique ou des micro-ondes.

11. Procédé selon l'une des revendications précédentes, **caractérisé en ce que** le corps support (1) et/ou le matériau de revêtement (2) est chauffé localement par rayonnement thermique.

12. Procédé selon l'une des revendications précédentes, **caractérisé en ce que** le corps support (1) est chauffé par contact de chaleur local (6) et/ou est refroidi par contact de refroidissement local (7).

13. Procédé selon l'une des revendications précédentes, **caractérisé en ce que** le corps support (1) et/ou le matériau de revêtement (2) est chauffé ou refroidi localement à l'aide d'un flux de fluide.

14. Procédé selon l'une des revendications précédentes, **caractérisé en ce que** le matériau de revêtement (2) est appliqué en forme liquide, notamment comme suspension.

15. Procédé selon l'une des revendications précédentes, **caractérisé en ce qu'**un washcoat est utilisé comme matériau de revêtement (2).

16. Procédé selon l'une des revendications précédentes, **caractérisé en ce que** le matériau de revêtement (2) a des substances à activité catalytique, notamment des métaux précieux.

17. Dispositif pour le revêtement d'un corps support (1) avec un matériau de revêtement (2), de préférence avec un procédé selon l'une des revendications 1 à 16, comportant un moyen d'application (11) et au moins un moyen de prescription de la température (12, 13, 14), dans quel cas le matériau de revêtement peut être appliqué sur le corps support (1) à l'aide du moyen d'application (11) et dans quel cas à l'aide du moyen de prescription de la température (12, 13, 14) une distribution spatialement inhomogène de la température du matériau de revêtement (2) peut être générée avant ou durant l'application du matériau de revêtement (2), **caractérisé par** au moins deux moyens de prescription de la température (12, 13, 14) pour générer une distribution spatialement inhomogène de la température dans le corps support (1).
